# EUROPÄISCHE PATENTSCHRIFT

(11) **EP 2 570 229 B1**
(45) Veröffentlichungstag und Bekanntmachung des Hinweises auf die Patenterteilung: **03.08.2016**
(21) Anmeldenummer: 12184802.2
(22) Anmeldetag: 18.09.2012
(51) Int. Cl.: B23P 13/00, B23P 23/04, B23Q 39/02, B24B 5/42, B23H 9/00, B23H 3/00, B23B 5/18, B23C 3/06, B23D 37/00, B23K 26/00

(54) **Verfahren und Vorrichtung zur Fertigbearbeitung von Werkstücken**
Device and method for finishing workpieces
Procédé et dispositif de finition de pièces à usiner

(30) Priorität: 18.09.2011 DE 102011113757
(43) Veröffentlichungstag der Anmeldung: 20.03.2013
(73) Patentinhaber: MAG IAS GmbH, 73033 Göppingen (DE)
(72) Erfinder: Dr. Schreiber, Leo, 73529 Schwäbisch Gmünd (DE); Weber, Matthias, 73033 Göppingen (DE)
(74) Vertreter: Weickmann & Weickmann PartmbB

(56) Entgegenhaltungen:
- EP-A1- 2 338 625
- WO-A1-02/34466
- WO-A1-03/010350
- DE-A1- 19 714 677
- DE-A1- 19 749 939
- DE-A1- 19 749 940
- DE-A1- 19 846 944
- DE-A1-102006 014 972
- DE-A1-102006 046 765
- US-A1- 2003 150 302
- US-A1- 2006 138 100

## Beschreibung

### I. Anwendungsgebiet

Die Erfindung betrifft ein Verfahren zum Bearbeiten von rotationssymmetrischen und gegebenenfalls nicht-rotationssymmetrischen Teilen, insbesondere von Kurbelwellen, in der Serienproduktion, insbesondere der Lagerflächen (sowohl der Hublager als auch der Mittellager) von Kurbelwellen bis zum verwendungsfähigen Zustand, also dem Zustand, in dem ohne weitere Materialabnahme an den Lagerflächen zum Beispiel die Kurbelwelle im Motor eingebaut werden kann.

Dabei sind unter Lagerflächen sowohl die Mantelflächen, also die Lagerbreite, zu verstehen, als auch die so genannten Spiegelflächen, also die an die Lagerbreite angrenzenden Stirnflächen, die beispielsweise der axialen Lagerung dienen.

### II. Technischer Hintergrund

Kurbelwellen, insbesondere die Kurbelwellen für Pkw-Motoren mit hohen Zylinderzahlen, sind als während der Bearbeitung instabile und damit schwer bearbeitbare Werkstücke bekannt. Die Beurteilung der Maßhaltigkeit einer fertigen Kurbelwelle erfolgt primär - neben der axialen Lagerbreite - durch die Beurteilung folgender Parameter:
- Durchmesserabweichung = maximale Abweichung vom vorgegebenen Solldurchmesser des Lagerzapfens,
- Rundheit = makroskopische Abweichung von der kreisrunden Sollkontur des Lagerzapfens, angegeben durch den Abstand des äußeren und inneren Hüllkreises,
- Rundlauf = radiale Maßabweichung bei sich drehendem Werkstück, verursacht durch eine Exzentrizität der drehenden Lagerstelle und/oder eine Formabweichung der Lagerstelle von der idealen Kreisform,
- Rauheit in Form der gemittelten Einzelrautiefe Rz = die mikroskopische Rauheit der Oberfläche der Lagerstelle repräsentierender, rechnerisch ermittelter Wert,
- Traganteil = der tragende Flächenanteil der mikroskopisch betrachteten Oberflächenstruktur, der zu einer anliegenden Gegenfläche in Kontakt steht,
und zusätzlich bei den Hublagerstellen:
- Hubabweichung = maßliche Abweichung des Isthubes (Abstand der Istmitte des Hublagerzapfens von der Istmitte der Mittellager), vom Sollhub und
- Winkelabweichung = in Grad oder als auf den Hub bezogenes Längenmaß in Umfangsrichtung angegebene Abweichung der Ist-Winkellage des Hublagerzapfens von seiner Sollwinkellage relativ zur Mittellagerachse und bezüglich der Winkelstellung zu den übrigen Hublagerzapfen.

Dabei wird die Einhaltung der gewünschten Toleranzen bei diesen Parametern sowohl durch die zur Verfügung stehenden Bearbeitungsverfahren als auch die Instabilität des Werkstückes und die Bearbeitungskräfte begrenzt. Auch die Effizienz und Wirtschaftlichkeit des Verfahrens spielt in der Praxis eine große Rolle, vor allem für die Serienfertigung, in der Taktzeit und damit Herstellkosten eine entscheidende Rolle spielen, während bei Bearbeitungen im Einzelversuch oder für Prototypen diesen Beschränkungen nicht unterliegen.

Klassisch wurde der Materialabtrag von den Lagerstellen der urgeformten, also gegossenen oder geschmiedeten, Kurbelwelle, in 3 Material abnehmenden Bearbeitungsschritten nacheinander durchgeführt:
1. Schritt: Grobbearbeitung:
   Spanende Bearbeitung mittels bestimmter Schneide. Dabei wurden die Verfahren Drehen, Drehräumen, Dreh-Drehräumen, Innenrundfräsen und Außenrundfräsen, Orthogonalfräsen, insbesondere als Hochgeschwindigkeitsfräsen, bzw. Kombinationen dieser Verfahren eingesetzt. Das abzutragende Materialaufmaß bewegte sich im mehreren Millimeter-Bereich.
2. Schritt: Feinbearbeitung:
   Nassschleifen, insbesondere nach vorheriger Härtung des Werkstückes, mittels eines harten, massiven Schleifwerkzeuges, beispielsweise einer Schleifscheibe, welche meist mit ihrer Rotationsachse parallel zur Rotationsachse der zu bearbeitenden Kurbelwelle rotiert; das abzutragende Materialaufmaß bewegte sich im mehrere 1/10-Millimeter-Bereich.
      Bei hohen Aufmaßen erfolgte die Schleifbearbeitung auch mehrstufig, z. B. zweistufig durch Vor- und Fertigschleifen.
3. Schritt: primär Oberflächenstrukturierung:
   Finishen durch in der Regel ein oszillierendes Schleifmittel (Schleifband oder Schleifstein), welches an den Außenumfang der rotierenden Lagerstelle angedrückt wird; das abgetragene Materialaufmaß bewegt sich z. Z. im 1/100-Millimeter- oder gar µm-Bereich.

Dabei ist die Bearbeitung noch nach dem Material der Kurbelwelle (Stahl oder Guss) zu unterscheiden, wobei insbesondere Stahlkurbelwellen, die bevorzugt für hoch belastete Einsatzfälle verwendet werden, nach der spanenden Bearbeitung des ersten Schrittes an den Oberflächen der Lagerstellen gehärtet werden. Dies bedingt einen erneuten Verzug der Kurbelwelle, welcher durch das Schleifen und Finishen kompensiert werden musste. Das Härten von Gusskurbelwellen wird z. Z. bereits vielfach weggelassen und kann durch Verwendung eines Gusswerkstoffes größerer Härte, z. B. GGG 60 oder 70 oder mehr und verbesserten Festigkeitswerten, vollständig vermieden werden.

Um die Kosten bei der Kurbelwellenbearbeitung zu senken, wird angestrebt, die Bearbeitung der Lagerstellen von drei auf zwei unterschiedliche Bearbeitungsstufen zu reduzieren.

Das Weglassen des Grobbearbeitungsschrittes, indem das Urformen, in der Regel das Schmieden, so maßgenau durchgeführt wird, dass anschließend nur noch eine Feinbearbeitung benötigt wird, hat in der Praxis zumindest für die Serienfertigung bisher nicht zum Erfolg geführt. Zumindest würde dies jedoch dazu führen, dass insbesondere der durch das Schleifen zu bewältigende Materialabtrag größer als bei der bisher üblichen Schleifbearbeitung sein muss.

Beim Materialabtrag mittels Nassschleifen ist jedoch nachteilig, dass
- wegen des zuzugebenden Kühlschmiermittels der anfallende Schleifschlamm problematisch in der Entsorgung ist,
- wegen des im Kühlschmiermittel enthaltenen Öles, z. B. beim CBN-Schleifen, immer eine latente Verpuffungsgefahr besteht,
- beim Schleifen die Menge des verwendeten Kühlschmiermittels wesentlich größer ist als bei spanenden Bearbeitungsverfahren, da das Kühlschmiermittel zusätzlich benutzt wird, um durch Aufstrahlen unter hohem Druck den Schleifstaub wieder aus der Oberfläche der Schleifscheibe zu entfernen, was hohe Energiemengen erfordert,
- dennoch die Gefahr einer Überhitzung des Werkstückes sehr groß ist.

Deshalb wurde in der Vergangenheit versucht, die Feinbearbeitung, bei teilweise gehärteten Werkstücken, also insbesondere die Bearbeitung nach dem Härten, vom Aufwand - also den Investitionskosten als auch den Bearbeitungszeiten und ähnlichem - zu minimieren.

Insbesondere wurde dabei versucht, das Nassschleifen zu eliminieren, und von der spanenden Bearbeitung direkt an beispielsweise das Finishen zu übergeben, wie es etwa die DE 197 14 677 A1 vorschlägt unter Vorgabe bestimmter Übergabebedingungen hinsichtlich der einzelnen Maßparameter. Diese Schrift stellt den nächstreichenden Stand der Technik dar und bildet jeweils den Oberbegriff der vorliegenden unabhängigen Ansprüche.

Auch die EP 2 338 625 A1 schlägt eine spezielle Feinbearbeitung mittels bestimmter Schneide vor, die den Schritt des Nassschleifens ersetzen soll, jedoch wird bei Bedarf anschließend ein Finishen vorgesehen, welches nicht nur Form und Oberfläche, sondern auch die Maßhaltigkeit im geringen Rahmen verbessern soll.

Die DE 10 2006 014 972 A1, die dem nächstliegenden Stand der Technik entspricht, offenbart dem Oberbegriff der Ansprüche 1 und 15.

Die bisherigen Optimierungsversuche berücksichtigen jedoch nicht ausreichend die Möglichkeiten und insbesondere Kombinationsmöglichkeiten der neueren Bearbeitungsverfahren mit bestimmter als auch mit unbestimmter Schneide sowie ohne Schneide, die inzwischen auch immer in Varianten für die Hartbearbeitung, also die Bearbeitung der gehärteten Werkstückflächen, existieren und damit auch nach den Härten am Werkstück eingesetzt werden können:
- Beim Drehfräsen, also dem Fräsen an einem rotierenden Werkstück, werden vor allem beim Außenfräsen, also einem Fräsen mit einem scheibenförmigen, am Umfang verzahnten, Fräser fein-ausrichtbare (bis auf 1 µm genau) Schneidplättchen verwendet, indem diese auf z.B. Keilsystemen etwa des Grundkörpers des Fräsers angeordnet sind, die so genau einstellbar sind, dass auch bei 20 bis 50 Zähnen auf einem Fräser eine sehr gute Rundheit und Durchmessergenauigkeit am Werkstück erreicht werden kann.
- Bei einem Orthogonalfräser wird inzwischen durch Verwendung von 1 bis 10 Schneiden auf der Stirnfläche eine akzeptable Abtragleistung erreicht, ohne die Oberflächenqualität allzu sehr negativ zu beeinflussen, da die Schneiden nicht nur sehr gut zueinander justiert oder zugeschliffen werden können, sondern da zusätzlich - was auch bei einem Außenfräser anwendbar ist - die Schneiden z.B. aus Feinstkornhartmetall mit einer sehr geringen Körnung bestehen. Vor allem aber wird hierdurch gleichzeitig die bisherige Unvereinbarkeit von Härte und Elastizität der Schneide teilweise überwunden.
- Beim Feinlängsdrehen der Lagerstellen war bisher das Problem, dass für das Ausdrehen des linken und des rechten Eck-Bereiches unterschiedlich geköpfte Drehmeißel benötigt würden, und deshalb im Übergangsbereich dieser beiden Bearbeitungsstellen regelmäßig ein nicht vermeidbarer Absatz von 10 bis 30 µm Höhe vorhanden war, der durch Finishen allein nicht effizient beseitigt werden kann, denn wegen der relativ ungenauen, selbstführenden Lagerung des Finishwerkzeuges muss für das Beseitigen eines solchen Absatzes ein mehrfach größerer Materialabtrag durchgeführt werden, was einen sehr hohen Zeitaufwand beim Finishen erfordert.

Durch einen in X-Richtung zustellbaren, in Z-Richtung vorschiebbaren und zusätzlich um die B-Achse drehbaren (Singlepointdrehen) Drehmeißel kann eine Lagerstelle jedoch mit einem einzigen Drehmeißel und damit ohne Absatz drehend bearbeitet werden.
- Das Tangentialdrehen mit einer schräg zur Rotationsachse des Werkstückes stehenden und tangential oder bogenförmig entlang bewegten Schneide ist inzwischen wirtschaftlich auch in der Serie anwendbar, nicht nur bei Mittellagern sondern auch bei Pleuellagern. Wenn dabei nicht die Drallfreiheit der erzeugten Oberfläche im Vordergrund steht, wird bei guter Effizienz eine hohe Maß- und Oberflächenqualität erzielt.
- Beim Trockenschleifen insbesondere mit einer Schleifscheibe oder einem Schleifstein unter Verzicht auf ein flüssiges Kühl- und Schmiermittel kann - selbst wenn eine Kühlung und Reinigung des Werkzeuges mittels Druckluft erfolgt - nach wie vor nur ein äußerst geringer Materialabtrag, insbesondere von ca. 10 - 30 µm, erreicht werden, insbesondere mit einer Körnung von zum Beispiel 200 µm bis 50 µm der Schleifscheibe.
- Beim Finishen wird gelegentlich das mehrstufige, so genannte Maßformfinishen angewandt, bei dem nur im ersten Schritt, bei dem mit grober Körnung von zum Beispiel 200 µm bis 50 µm gearbeitet wird, ein nennenswerter Materialabtrag bis etwa 30 µm erzielt wird und ggfs. nach Vermessung abgebrochen oder fortgesetzt wird.

Der zweite (Geometrie fertigstellen, messen) und dritte (Oberfläche strukturieren) Schritt des Finishens mit der kleineren Körnung von zum beispiel 50 µm bis 10 µm ergibt Materialabträge im Bereich von 15-5 µm, erfolgt zeitgesteuert, und dient zuletzt der Oberflächenstrukturierung.
- Ferner gibt es inzwischen das elektrochemische Ätzen von Oberflächen, welches dem Entgraten und speziellen Profilierungen von Oberflächen, also insbesondere dem Abtragen der Spitzen der mikroskopischen Oberflächenstruktur, dienen soll.

Bekanntermaßen kommt es bei der Strukturierung nicht nur darauf an, die Spitzen zu beseitigen, sondern auch die Täler offen zu halten und als Ölreservoir zu belassen. Sofern dies mit den bekannten Verfahren wie dem Finishen nicht ausreichend erzielbar ist, können diese aktiv eingebracht werden, unter anderem durch Beschuss mittels Laserstrahlen.

Natürlich sind gleichlaufend die Genauigkeitsanforderungen von Kundenseite ebenfalls gewachsen, die heute in der Regel bei 5 µm hinsichtlich der Rundheit, ISO-Qualitätsstufe 6 hinsichtlich der Durchmessergenauigkeit, also z.B. bei einer Pkw-Kurbelwelle etwa 16 µm und hinsichtlich des Rundlaufes zwischen 0,05 und 0,1 mm liegen.

### III. Darstellung der Erfindung

### a) Technische Aufgabe

Es ist daher die Aufgabe gemäß der Erfindung, die Vorgehensweise bei der Feinbearbeitung der gattungsgemäßen Werkstücke, insbesondere nach dem Härten, bis zur Einsatzfähigkeit zu vereinfachen, insbesondere die Zahl der Arbeitsschritte, **und eine hierfür geeignete Drehmaschine zur Verfügung zu stehen.**

### b) Lösung der Aufgabe

Diese Aufgabe wird durch die kennzeichnenden Merkmale der Ansprüche 1 und 15 gelöst. Vorteilhafte Ausführungsformen ergeben sich aus den Unteransprüchen.

Gegenstand der vorliegenden Erfindung ist das Bearbeiten der gattungsgemäßen Werkstücke, und insbesondere deren Lagerstellen, nach der spanenden Grobbearbeitung, die Genauigkeiten von 1/10-Millimetern erreicht und dem eventuell nachfolgenden Härten, welches einen zusätzlichen Verzug bedingt.

Die im Folgenden angesprochenen Bearbeitungsschritte dieses **Verfahrens** betreffen in der Regel ein- und dieselbe Bearbeitungsstelle.

Erfindungsgemäß wird davon ausgegangen, dass nach der Grobbearbeitung zunächst ein erster Feinbearbeitungsschritt notwendig ist, der der Erzielung der Maßhaltigkeit dient und ein zweiter Feinbearbeitungsschritt, der der Erzielung der entsprechenden Oberflächenqualität dient.

Der erste Feinbearbeitungsschritt ist eine Zerspanung mittels einer bestimmten Schneide. Hierfür stehen entweder das Drehfräsen - mittels eines Außenfräsers, der während der Bearbeitung parallel zum Werkstück rotiert, oder einem Orthogonalfräser, dessen Rotationsachse senkrecht oder windschief zur Drehachse des Werkstückes rotiert - oder das Drehen, speziell in der Form des Singlepointdrehens, zur Verfügung, die allesamt in der Lage sind, im Extremfall auf Toleranzen bis herab auf ca. 10 µm zu bearbeiten, was bei der erfindungsgemäßen Prozesskette jedoch nicht vollständig ausgereizt werden soll.

Für den zweiten Feinbearbeitungsschritt stehen Materialabnahmen mittels unbestimmter Schneide, wie etwa das Feintrockenschleifen oder das Finishen, also insbesondere die Feinstufen des Maßformfinishens, zur Verfügung oder auch das elektrochemische Härten mit oder ohne pulsierender Beaufschlagung der Elektroden.

Im Idealfall besteht die Prozesskette nach der Grobbearbeitung also aus nur erstem und zweitem Feinbearbeitungsschritt.

Nur falls notwendig, wird dazwischen ein Feinzwischenschritt durchgeführt. Hierfür stehen das Trockenschleifen zur Verfügung, mit dem nur sehr viel geringere Materialstärken abgenommen werden können als mit dem Nassschleifen, beispielsweise maximal 150 µm oder das Tangentialdrehen, also ein Verfahren mit bestimmter Schneide, oder die Grobstufe des Maßformfinishens. Auch das Singlepointdrehen ist hier eine Möglichkeit, falls dies nicht bereits bei dem ersten Feinbearbeitungsschritt gewählt wurde.

Von den Kundenanforderungen hängt es dann im Wesentlichen davon ab, ob nach dem zweiten Feinbearbeitungsschritt ein Feinabschlussschritt zur Strukturierung der Oberfläche notwendig ist.

Ein solcher Feinabschlussschritt, insbesondere mittels ECM oder Bandfinisheh, kann bevorzugt nur in einem bestimmten Umfangssegment des Werkstückes erfolgen, wenn es ein Segment gibt, in dem die Belastung höher ist als in anderen Bereichen, wie dies beispielsweise bei den Lagerstellen von Kurbelwellen der Fall ist.

Dies könnte vor allem der Einbringung von Kavitäten als Ölreservoire in der Oberfläche für das Werkstück für die Verbesserung der Schmierung und damit Begleiteigenschaften auf längere Zeit dienen.

Hier kommt vor allem ein gezielter Laserbeschuss zum Erzielen solcher Kavitäten in Frage, insbesondere nach der letzten Stufe des Finishens oder insbesondere als letzter Bearbeitungsschritt insgesamt, oder wiederum das elektrochemische Ätzen, falls dieses nicht bereits als Bearbeitungsverfahren beim zweiten Feinbearbeitungsschritt gewählt wurde.

Denn in diesem Fall werden die entsprechenden Erhebungen, zum Beispiel mit einer Höhe von maximal 10 µm, besser von maximal 6 µm, besser von maximal 2 µm zum Herauslösen der Kavitäten im Werkstück bereits in der Elektrode für das elektrochemische Ätzen mit eingearbeitet und in einem Arbeitsschritt diese Kavitäten eingebracht und die Spitzen der mikroskopischen Oberflächenstruktur gekappt.

Auf diese Weise wird gegenüber der konventionellen Prozesskette und trotz der erhöhten Anforderungen der Kunden eine Verkürzung der Prozesskette vorgenommen mit den Vorteilen, dass vor allem das Nassschleifen vermieden wird und darüber hinaus - je nach konkreter Kombination - mehrere Bearbeitungsschritte in der gleichen Maschine und Aufspannung durchgeführt werden können.

So können die Bearbeitungsverfahren des ersten und zweiten Feinbearbeitungsschrittes - mit Ausnahme des elektrochemischen Ätzens - gemeinsam in einer Maschine implementiert und damit das Werkstück in einer Aufspannung bearbeitet werden.

Selbst ein zusätzlicher Feinzwischenschritt kann dort untergebracht werden, unabhängig von der konkreten Wahl des Bearbeitungsverfahrens für diesen Feinzwischenschritt.

Selbst eine Lasereinheit zum Beschuss der Werkstückoberfläche kann zusätzlich in einer solchen vom Grundsatz her als Drehmaschine ausgelegte Maschine, also für ein während der Bearbeitung antreibbares und hinsichtlich der Drehlage definierte (C-Achse) Werkstück, eingesetzt werden.

Gemäß der vorliegenden Erfindung soll auf den ersten Feinbearbeitungsschritt, der mit bestimmter Schneide durchgeführt wird, unmittelbar ein Trockenschleifen oder Feintrockenschleifen erfolgen, wobei dies vorzugsweise in der gleichen Maschine und Aufspannung wie der erste Feinbearbeitungsschritt mit bestimmter Schneide erfolgen kann.

Dabei wird die Bearbeitung mit bestimmter Schneide vorzugsweise nur bis zu einer Genauigkeit von 25 µm bei der Rundheit und 30 µm beim Durchmesser durchgeführt, also bei weitem nicht die maximal mögliche Genauigkeit bei diesem Bearbeitungsschritt angestrebt.

Vorzugsweise wird als erster Feinbearbeitungsschritt das Drehfräsen, bevorzugt in der Form des Außenfräsens oder Orthogonalfräsens, eingesetzt.

Ein besonders günstiges Verfahren besteht hinsichtlich des ersten Feinbearbeitungsschrittes darin, dass
- die Hauptlager mittels Singlepointdrehen bearbeitet werden und zwar insbesondere mit Schnittgeschwindigkeiten von 250 - 400 m/min und/oder bei einer Genauigkeit hinsichtlich der Rundheit und des Durchmessers bis auf maximal 10 µm,
- die Hublager mittels Drehfräsen bearbeitet werden, insbesondere in Form des Umfangsfräsens, und bei dem Drehfräsen mit Schnittgeschwindigkeiten von 150 - 400 m/min gearbeitet wird und/oder sowohl bei der Rundheit als auch beim Durchmesser auf eine Genauigkeit von 10 µm oder genauer gearbeitet wird, falls ein Finisherr oder ECM folgt.

Das Trockenschleifen oder Feintrockenschleifen wird insbesondere mittels einer Schleifscheibe durchgeführt, die ebenfalls um eine Rotationsachse parallel zur Drehachse während der Bearbeitung rotiert. Dadurch können Antriebseinheiten für Schleifscheibe und Scheibenfräser verwendet werden, die sehr ähnlich oder sogar identisch aufgebaut sind.

Falls nach dem ersten Feinbearbeitungsschritt unmittelbar das Feintrockenschleifen durchgeführt wird, so wird im ersten Feinbearbeitungsschritt bis auf eine Genauigkeit von 15 µm oder genauer bei der Rundheit und 15 µm oder genauer beim Durchmesser gearbeitet. Dies sind Aufmaße, die mit der beim Feintrockenschleifen vorhandenen sehr geringen Körnung von 70 µm bis 100 µm (Nennmaschenweite beim Aussieben der Körner) der Körner der Schleifscheibe noch abnehmbar sind, und dadurch ist es - je nach geforderter Endgenauigkeit - auch möglich, das Feintrockenschleifen als Endbearbeitung zu belassen, also insbesondere kein Bandfinishen nachfolgen zu lassen, sondern höchstens einen Feinabschlussschritt zur Oberflächenstrukturierung, beispielsweise Laserbeschuss oder Einbringen von Kavitäten im Werkstück oder Einebnen der Oberflächenspitzen mittels elektrochemischem Ätzen.

Eine andere Möglichkeit besteht darin, das Trockenschleifen mit einer gröberen Körnung zum Beispiel von 140 µm bis 200 µm (Nennmaschenweite beim Aussieben der Körner) der Körner der Schleifscheibe und damit größeren Materialabnahme durchzuführen, dann aber als zweiten Feinbearbeitungsschritt danach ein Finishen oder elektrochemisches Ätzen durchzuführen.

Auch in diesem Fall wird bei dem ersten Feinbearbeitungsschritt mittels bestimmter Schneide nur bis auf eine Genauigkeit von 25 µm bei der Rundheit und 30 µm beim Durchmesser gearbeitet, da diese größeren Aufmaße vom Schleifen wegen der dort benutzten gröberen Körnung auch im Trockenschleifen noch bewältigt werden können.

Sowohl beim Feintrockenschleifen als auch beim gröberen Trockenschleifen wird bevorzugt eine trockene Kühlung und Reinigung des Schleifmittels z.B. mittels Druckluft an oder nahe der Bearbeitungsstelle vorgesehen.

Da im vorliegenden Fall - unabhängig von der konkreten gewählten Bearbeitungskombination - nur das elektrochemische Ätzen eine Nassbearbeitung darstellt, können alle anderen Bearbeitungsschritte in der gleichen Maschine durchgeführt werden und damit am Werkstück in derselben Werkstückaufspannung an den einzelnen Bearbeitungsstellen durchgeführt werden. Zusätzlich erlaubt dies die gleichzeitige Bearbeitung verschiedener Bearbeitungsstellen mit verschiedenen Bearbeitungsschritten.

Dadurch wird nicht nur der Investitionsaufwand für den Prozess gesenkt, sondern vor allem wird das Auftreten von zusätzlichen Maßungenauigkeiten vermieden, wie es unweigerlich beim Ausspannen und neuen Einspannen eines Werkstückes erfolgt, wenn mit den hier in Rede stehenden Genauigkeiten gearbeitet wird.

Ein weiterer Vorteil bei der Kombination des Außenfräsens mit dem Trockenschleifen liegt darin, dass beide Werkzeuge aufgrund ihrer scheibenförmigen Grundform und Rotation um die Z-Richtung nicht nur ähnlich gestaltet sind, sondern auf ähnlichen oder gar identischen Werkzeugsupporten eingesetzt werden können.

Dabei kann sogar auf die üblicherweise sehr viel höhere Schnittgeschwindigkeit einer Schleifscheibe gegenüber einem Scheibenfräser verzichtet werden, um diesen Vorteil zu nutzen. So kann beispielsweise die Drehzahl und/oder Schnittgeschwindigkeit der Schleifscheibe maximal auf das Dreifache, besser nur das Doppelte, des Wertes des Scheibenfräsers festgelegt werden, was die Verwendung teilweise oder vollständig identisch aufgebauter Supporte ermöglicht.

Insbesondere zu diesem Zweck ist es auch sinnvoll, den Durchmesser der Schleifscheibe etwa in der Größenordnung des Durchmessers des Schreibenfräsers festzulegen, maximal jedoch 20 % größer.

Um die Genauigkeit im ersten Feinbearbeitungsschritt weiter zu verbessern, werden Werkzeuge verwendet, bei denen die Schneiden mittels z.B. Keilsystemen einer Feinausrichtung gegenüber dem Werkzeuggrundkörper von genauer als 5 µm unterzogen werden können, um dadurch Genauigkeiten im Bereich von 10 µm und auch darunter noch zu erzielen.

Zusätzlich wird - bei Verwendung eines Orthogonalfräsers - ein Fräser mit einer bis 10 Schneiden, insbesondere vier bis sechs Schneiden, an der Stirnfläche verwendet, die aber vorzugsweise leicht ungleichmäßig über dem Umfang verteilt sind, um keine Eigenfrequenz mit Aufschwingen zu bewirken.

Zusätzlich wird der Orthogonalfräser im Eingriff an der zu bearbeitenden Mantelfläche - meist beginnend am Außenumfang der Stirnfläche des Orthogonalfräsers - in Y-Richtung gegenüber der Drehachse des Werkstückes während des Eingriffes verfahren und zwar um mindestens 20%, besser mindestens 50%, insbesondere aber maximal 60% des Durchmessers des Orthogonalfräsers, sodass dadurch das Problem der im Zentrum des Orthogonalfräsers abnehmenden oder mangels Schneiden erst gar nicht vorhandenen Schneidleistung und Schneidrichtung dadurch gelöst wird, dass durch diesen stetig durchgeführten Achsversatz alle Längenbereiche der Lagerstelle ausreichend genau bearbeitet werden.

Zu diesem Zweck dreht sich das Werkstück während der Durchführung dieses Achsversatzes des Orthogonalfräsers mindestens fünfmal, besser mindestens 10-mal oder noch besser mindestens 20-mal mal.

Die Drehzahl des Orthogonalfräsers sollte dabei mindestens das 80-fache, besser 100-fache oder besser 130-fache der Drehzahl des Werkstückes betragen.

Bei der Bearbeitung von gehärteten Oberflächen bestehen die Schneiden der Zerspanungswerkzeuge mit bestimmter Schneide in der Regel aus CBM oder Hartmetall. Das Hartmetall ist dann jedoch vorzugsweise aus einer Körnung von 0,2 µm bis 0,5 µm hergestellt und dadurch trotz ausreichender Härte relativ elastisch.

Falls im zweiten Feinbearbeitungsschritt das elektrochemische Ätzen gewählt wird, wird damit eine Materialabnahme von maximal 30 µm, besser nur 20 µm, durchgeführt, aber eine Abnahme von mindestens 5 µm, da erst dadurch eine ausreichende Glättung der mikroskopischen Oberflächenstruktur auf einem Traganteil von mindestens 50%, aber maximal 85 %, erreicht wird, was bei dem zweiten Feinbearbeitungsschritt das generelle Ziel ist.

Eine weitere Beschleunigung des Herstellprozesses kann dadurch erreicht werden, dass mit dem zweiten Feinbearbeitungsschritt, insbesondere dem elektrochemischen Ätzen, nur derjenige Umfangsbereich des Hublagers, also des Pleuellagers, an der Kurbelwelle bearbeitet wird, der bei der Zündung mit dem Druck des Pleuels beaufschlagt wird, was immer der gleiche Umfangsbereich ist.

Insbesondere wird im zweiten Feinbearbeitungsschritt der entsprechende halbe Umfang des Pleuellagers bearbeitet.

Auf diese Art und Weise können beim ersten Feinbearbeitungsschritt sowohl Hublager als auch Pleuellager in der gleichen Aufspannung bearbeitet werden und insbesondere in der gleichen Aufspannung wie die vorangehende Grobbearbeitung, was vor allem dann von Interesse ist, wenn dazwischen ein Härten nicht stattfindet oder ein Induktivhärten ebenfalls in der gleichen Maschine und in der gleichen Aufspannung durchgeführt wird.

Vor allem in dem zweiten Feinbearbeitungsschritt - im ersten kann dies natürlich ebenso erfolgen - wird die Kurbelwelle mittels einer Lünette abgestützt und zwar an einem bereits im ersten Schritt fein bearbeiteten Lager insbesondere unmittelbar neben dem zu bearbeitenden Lager.

Dadurch ergeben sich auf den abgestützten Lagerumfängen Abdrücke der Lünette, die zwar maßlich und hinsichtlich der Oberflächenqualität nicht relevant sind, aber aus optischen Gründen nachbearbeitet werden sollen, indem in einem letzten Feinbearbeitungsschritt diese Abdrücke entfernt werden, was dadurch möglich wird, dass dabei die Abstützung durch die benachbarte Lünette immer auf der Seite der Fortschrittsrichtung dieses letzten Feinbearbeitungsschrittes liegt.

Beim ersten Feinbearbeitungsschritt werden Flansch und Zapfen vorzugsweise bearbeitet, während die Kurbelwelle mittels eines Backenfutters mit einer Zentrierspitze im Zentrum und demgegenüber rückziehbaren Backen einerseits vom Backenfutter und am anderen Ende von der Zentrierspitze gehalten wird.

Während beim Zapfen in aller Regel kein zweiter Feinbearbeitungsschritt durchgeführt wird, wird beim Flansch im zweiten Feinbearbeitungsschritt versucht, eine drallfreie Oberfläche zu erzielen.

Um das erfindungsgemäße Verfahren durchführen zu können, benötigt die dafür benutzte **Drehmaschine** mit C-Achse außer einem Maschinenbett, Spindelstock und Gegen-Spindelstock mit den entsprechenden Spannfuttern und einer Lünette einerseits eine Dreheinheit oder eine Fräseinheit mit einem Scheibenfräser oder einem Orthogonalfräser, wobei der Orthogonalfräser zusätzlich zur X-Achse eine Y-Achse aufweist und die Drehmaschine entweder eine Finisheinheit oder eine um eine Parallele zur C-Achse rotierende Schleifscheibe aufweist.

In einer bevorzugten Ausführungsform umfasst die Drehmaschine ferner eine Lasereinheit zum Beschießen der Umfangflächen des Werkstückes und/oder eine Messvorrichtung für Rundheit und/oder Durchmesser.

### c) Ausführungsbeispiele

Ausführungsformen gemäß der Erfindung sind im Folgenden beispielhaft näher beschrieben. Es zeigen:

Es zeigen:
- Fig. 1a, b:: eine übliche Kurbelwelle in Seitenansicht und eine vergrößerte einzelne Lagerstelle,
- Fig. 2a, b:: eine Drehmaschine mit oberhalb als auch unterhalb der Drehachse liegenden Supporten,
- Fig. 3:: eine Drehfräsmaschine mit nur oberhalb der Drehachse liegenden Supporten,
- Fig. 4a,b:: verschiedene Bearbeitungssituationen an einem symbolhaften Werkstück,
- Fig. 5:: Maßabweichungen im Querschnitt einer Lagerstelle und
- Fig. 6:: mikroskopische Oberflächenstrukturen an einer Werkstückoberfläche.

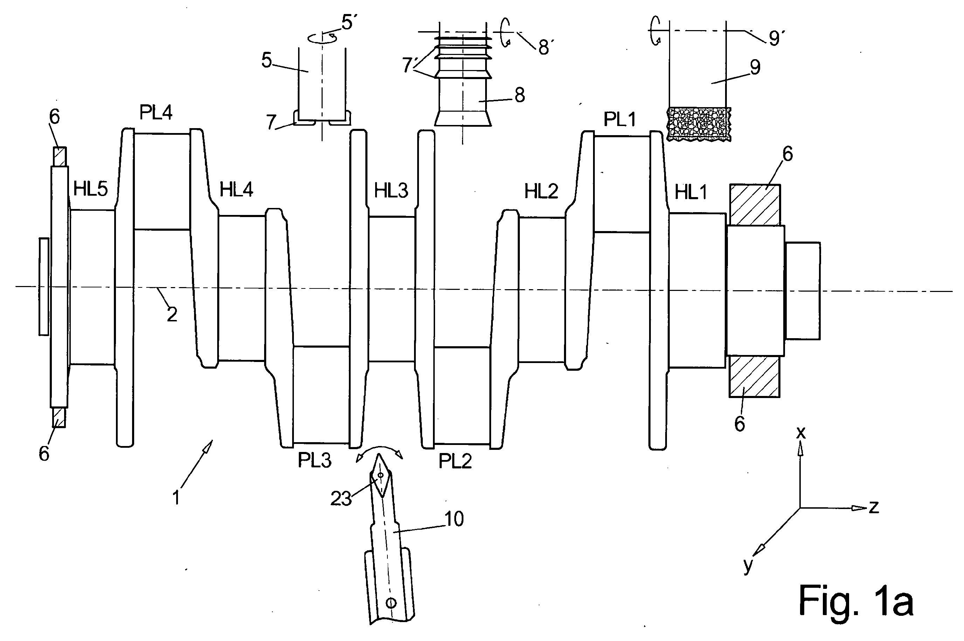

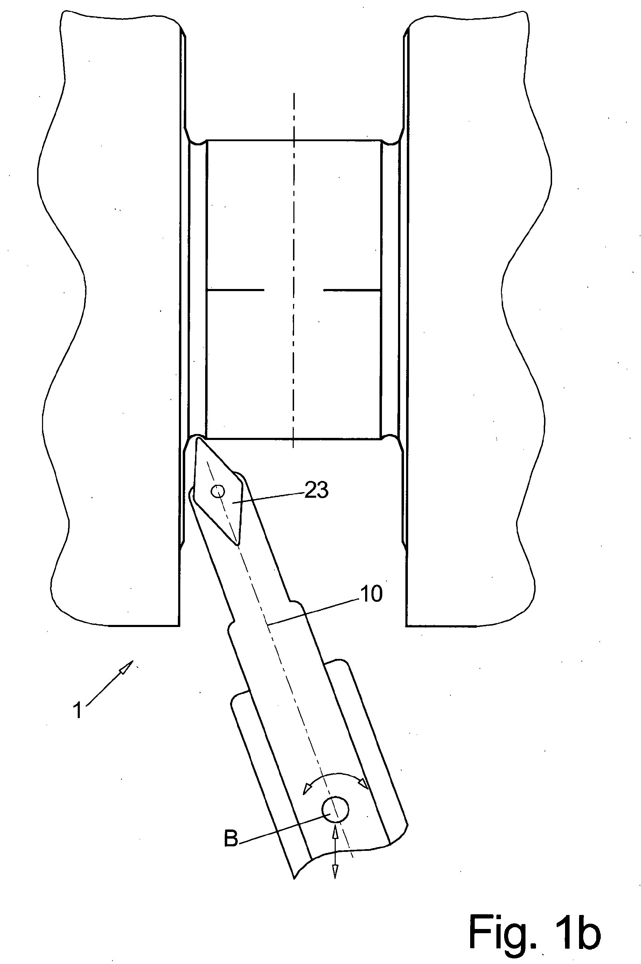

Fig. 1 a zeigt in der Seitenansicht eine typische Kurbelwelle 1 für einen Vierzylinderverbrennungsmotor, also mit vier exzentrischen Hub- oder Pleuellagern PL1 bis PL4 und daneben angeordneten insgesamt fünf Hauptlagern HL1 bis HL5, die auf der späteren Rotationsachse (der Z-Achse) der Kurbelwelle angeordnet sind, auf der in der Darstellung der Fig. 1 die Kurbelwelle 1 auch als Drehachse 2 in einer nicht näher dargestellten Drehmaschine aufgespannt ist, und zwar durch radiales Spannen mittels Spannbacken 6 an dem Flansch 4 am einen Ende und dem Zapfen 3 am anderen Ende der Kurbelwelle 1.

Erfindungsgemäß geht es vor allem um das Bearbeiten der Mantelflächen der Lagerstellen, also der Hauptlager sowie der Pleuellager, einschließlich der daran angrenzenden Seitenflächen, der so genannten Spiegelflächen.

Oberhalb und unterhalb der Kurbelwelle 1 sind beispielhaft Bearbeitungswerkzeuge dargestellt, oben von links nach rechts:
- zum Einen ein Fingerfräser 5, dessen Rotationsachse 5' lotrecht zur Drehachse 2, die bei Drehmaschinen üblicherweise als Z-Achse im Raumkoordinatensystem definiert wird, steht.
- auf der Stirnfläche des Fingerfräsers sind ein oder mehrere, vorzugsweise 2 bis 8, Schneiden 7 angeordnet, die sich bis auf die Umfangsfläche des Fingerfräsers 5 erstrecken, so dass durch Kontaktieren des rotierenden Fingerfräsers 5 an einer Mantelfläche einer rotierenden Lagerstelle die Lagerstelle spanend bearbeitet werden kann.
- daneben ist ein Scheibenfräser 8 angeordnet, dessen Rotationsachse 8' parallel zur Z-Achse liegt, und auf dessen Umfang eine große Zahl von Schneiden 7' angeordnet sind, die sich entlang der gesamten Breite der Umfangsfläche und radial über den äußeren Randbereich des scheibenförmigen Grundkörpers des Scheibenfräsers 8 erstrecken.

Wegen der großen Anzahl von meist ca. 80 Schneiden bzw. Schneidplättchen 23, die an einem Scheibenfräser 8 mit beispielsweise 700 mm Durchmesser justiert werden müssen, ist die exakte Justierung in radialer und axialer Richtung übereinstimmend für alle Schneidplättchen hier mit einem großen Zeitaufwand verbunden.
- Rechts daneben ist eine ebenfalls um eine in Z-Richtung liegende Rotationsachse 9' drehende Schleifscheibe 9 dargestellt, die in ihrem Mantelbereich und den angrenzenden Stirnflächenbereichen mit Schleifkörnern, in der Regel Hartmetall, Keramik oder CBN besetzt ist und meist - wie der Scheibenfräser 8 ebenfalls - eine in Z-Richtung gemessene axiale Erstreckung besitzt, die der Breite der jeweiligen Lagerstelle entspricht.

Unterhalb der Kurbelwelle ist ein Drehwerkzeug 10 in der Ausführungsform als Singlepointdrehwerkzeug dargestellt, welches nicht exakt in X-Richtung, sondern leicht schräg hierzu in Richtung Lagerstelle ragt und diese Kontaktieren kann, um auch eine der Ecken der Lagerstelle ausdrehen zu können.

Damit mit ein- und demselben Drehwerkzeug 10 beide Ecken einschließlich der dazwischen liegenden Mantelflächen ohne abzusetzen und damit ohne einen Absatz zu erzeugen, gedreht werden können, ist dieses Drehwerkzeug 10 - wie in Fig. 1b vergrößert dargestellt - um die B-Achse schwenkbar zusätzlich zu seiner Verfahrbarkeit in X-Richtung und natürlich ausreichend schlank, um in die Lagerstelle einfahren zu können.

Es versteht sich von selbst, dass bei Bearbeiten eines der Pleuellager PL1 bis PL4 an der um die Hauptlagerachse drehenden Kurbelwelle diese im Eingriff befindlichen Werkzeuge zusätzlich eine Nachführbewegung in X-Richtung durchführen müssen, und beim Fingerfräser 7 sowie beim Schneidwerkzeug 10 hierfür zusätzlich eine Nachführbewegung in Y-Richtung notwendig ist, um dem umlaufenden Pleuellager folgen zu können.

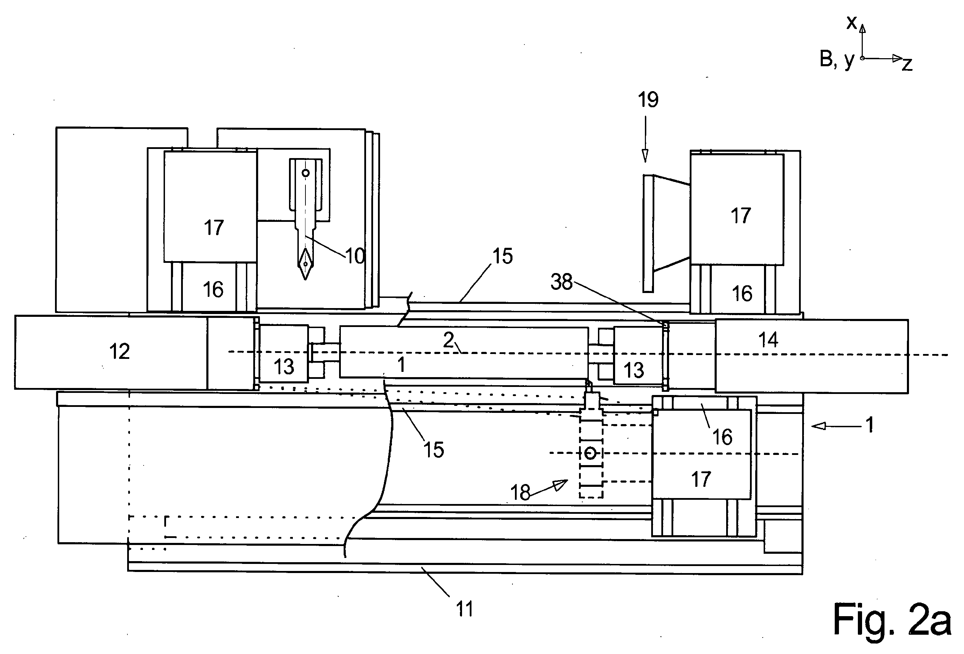

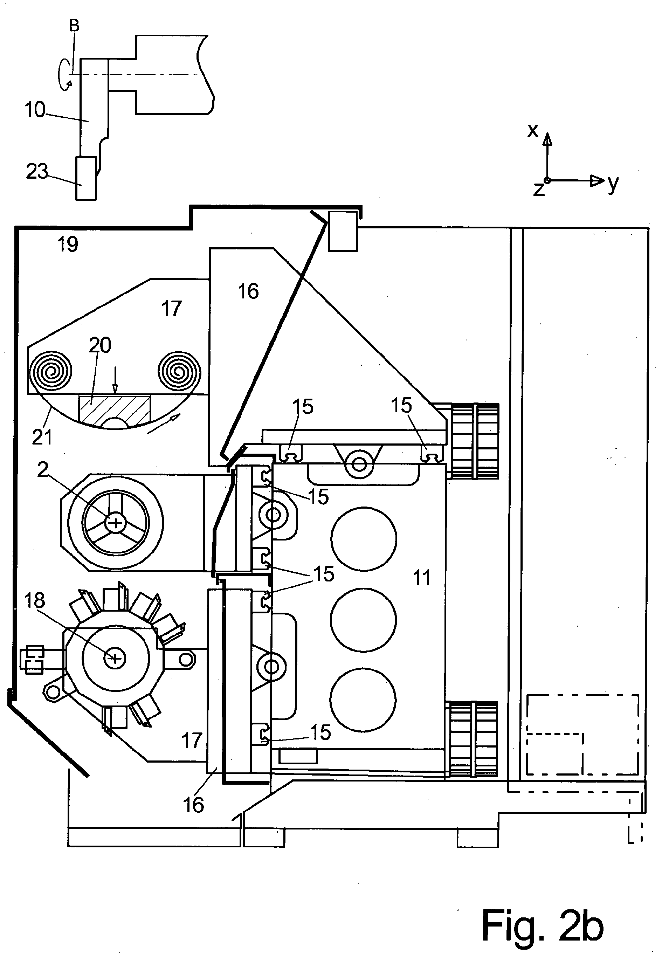

Fig. 2a und b zeigen in Frontansicht und Z-Richtung betrachtet beispielhaft eine Drehmaschine, wie sie zur Bearbeitung solcher Werkstücke wie Kurbelwellen mit den erfindungsgemäßen Verfahren benutzt werden kann:

Wie Fig. 2b zeigt, ist vor der senkrechten Frontfläche des Maschinenbettes 11 in dessen oberem Bereich ein Spindelstock 12 angeordnet, der ein drehend antreibbares Spannfutter 13 mit Spanbacken 6 trägt. Dem Spindelstock 12 gegenüberliegend ist ein Gegenspindelstock 14 angeordnet, der ebenfalls ein Spannfutter 13 trägt, so dass ein Werkstück, beispielsweise eine Kurbelwelle 1, mit seinen beiden Enden auf der Drehachse 2, die in Z-Richtung verläuft, in jeweils einem der Spannfutter 13 aufgenommen und drehend angetrieben werden kann.

Auf der Frontseite des Bettes 11 unterhalb der Drehachse sowie auf der ebenen Oberseite des Bettes 11 sind jeweils in Z-Richtung verlaufende, paarweise Längsführungen 15 angeordnet, auf denen Werkzeugeinheiten verfahrbar sind, in diesem Fall eine Werkzeugeinheit auf dem unteren und zwei auf den oberen Längsführungen 15:

Jede Werkzeugeinheit besteht aus einem entlang der Längsführungen 15 verfahrbaren Z-Schlitten 16 und einem darauf laufenden, in X-Richtung verfahrbaren X-Schlitten 17, auf dem das Werkzeug oder die Werkzeugeinheit montiert ist:

Bei der Einheit unterhalb der Drehachse 2 ist dies ein üblicher Werkzeugrevolver 18 mit darin eingesetztem Drehwerkzeug 10 in der Bauform eines Sternrevolvers und mit einer Schwenkachse, die in Z-Richtung verläuft.

Bei der linken oberen Einheit handelt es sich um ein einzelnes Drehwerkzeug 10 in Singlepointausführung, also schwenkbar um die B-Achse, das sich etwa in X-Richtung erstreckt und auch in X-Richtung verfahrbar ist auch in Abstimmung mit der Schwenkbewegung.

Bei der rechten oberen Einheit handelt es sich um Finishwerkzeug 19, das eine Umfangsfläche am Werkstück glätten kann.

In Fig. 2b ist dieses Finish-Werkzeug 19 in Z-Richtung betrachtet dargestellt. Dort ist ersichtlich, dass dieses Werkzeug ein Finishformteil 20 umfasst mit einer Kavität entsprechend der konvexen Umfangsfläche des Werkstückes, an die es angelegt werden soll, z. B. in Form eines Halbkreises, und ein Finishband 21, welches über die Kontaktfläche des Formteiles 20 geführt ist und mit seinen Enden auf je einer Vorratsrolle aufgewickelt ist.

Auch ein Singlepointdrehwerkzeug 10 ist in dieser Ansicht daneben in Fig. 2B nochmals vergrößert dargestellt.

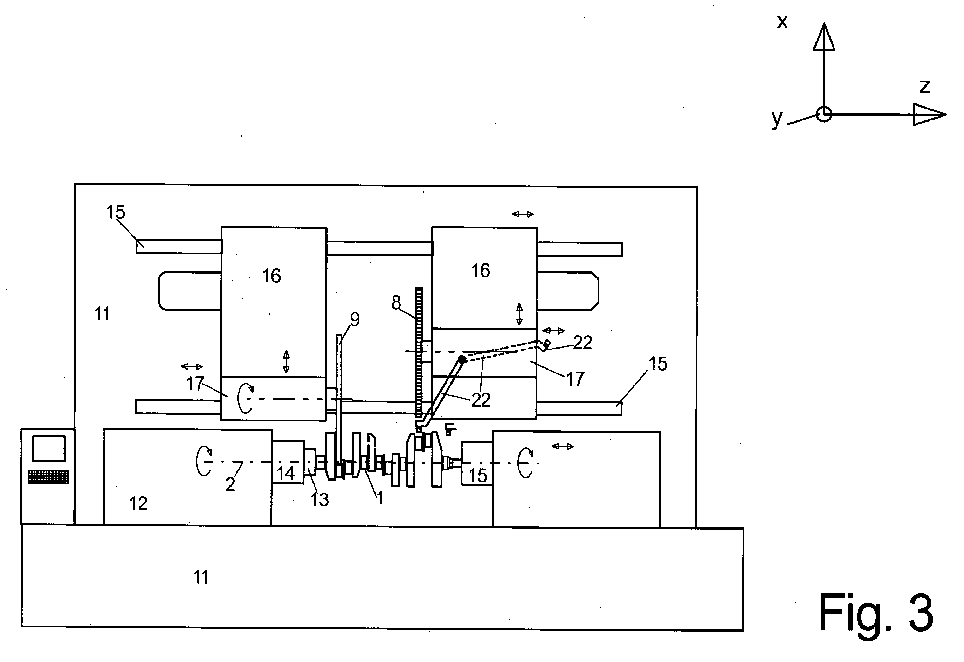

Die Fig. 3 zeigt dagegen eine Drehfräsmaschine, bei der wiederum eine Kurbelwelle 1 als Werkstück zwischen zwei gegeneinander gerichteten Spannfuttern 13 von Spindelstock und Gegenspindelstock 14 gehalten und drehend um die Drehachse 2 antreibbar ist, die hier ebenso wie bei der Drehmaschine der Figuren 2 als C-Achse ausgebildet ist.

In diesem Fall befinden sich nur oberhalb der Drehachse 2 am Maschinenbett 11 Längsführungen 15, auf denen zwei Werkzeugeinheiten mit Z-Schlitten 16 und darauf laufendem X-Schlitten 17 vorhanden sind.

In diesem Fall trägt der rechte X-Schlitten 17 jedoch einen Scheibenfräser 8, der parallel zur Drehachse rotiert, wie in Fig. 1 angedeutet, und der linke Z-Schlitten 17 eine Schleifscheibe 9, die ebenfalls um eine Achse parallel zur Z-Achse rotiert.

Zusätzlich ist am rechten X-Schlitten 17 noch eine Messeinheit 22 vorhanden, die durch Verschwenken aktiviert und deaktiviert werden kann, um ohne Ausspannen oder Umspannen des Werkstückes Messungen an einer Umfangsfläche hinsichtlich Durchmesser, Rundheit, Längsposition der Spiegelfläche durchführen zu können, indem ein in X-Richtung anzunähernder Messtaster die Umfangsfläche kontaktiert.

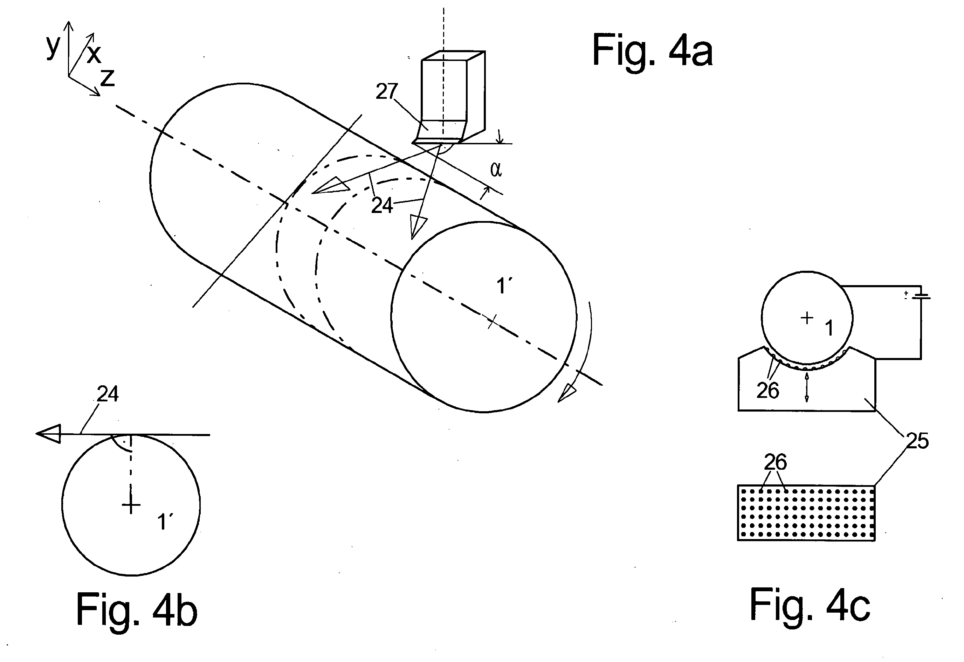

Die Fig. 4a zeigt - nicht am Beispiel einer Kurbelwelle, sondern an einem zylindrischen Werkstück - die Bearbeitung eines Teils der Umfangsfläche, was ebenso gut die Umfangsfläche eines Hublagers oder Pleuellagers sein könnte, mittels Tangentialdrehen:

Dabei wird eine windschief zur Drehachse des rotierenden Werkstückes stehende - gerade oder ballige - Schneide in tangentiale Bewegungsrichtung 24 kontaktierend an der Umfangsfläche des Werkstückes entlang bewegt, bei einer geraden Schneide in einer tangentialen, geraden Richtung und bei einer balligen Schneide in einer tangentialen, bogenförmigen Richtung um eine Schwenkachse, die parallel zur Drehachse 2 verläuft.

Damit können nur sehr geringe Übermaße abgenommen werden, das Bearbeitungsergebnis ist jedoch hochgenau und hat eine sehr gute Oberfläche.

In Fig. 4c ist das elektrochemische Ätzen dargestellt.

Dabei wird eine ECM-Elektrode 25, deren Kontaktfläche vorzugsweise der Kontur des zu bearbeitenden Umfangs des Werkstückes angepasst ist und eine entsprechende Kavität aufweist, gegen das Werkstück angenähert, wobei zwischen dem Werkstück einerseits und der Elektrode 25 andererseits ein elektrischer Strom bzw. eine elektrische Spannung angelegt wird und zusätzlich eine Salzlösung oder Säure zwischen beiden eingebracht wird.

Bei entsprechender Wahl dieser Parameter werden oberflächennahe Bereiche, insbesondere die Spitzen der mikroskopischen Oberflächenstruktur des Werkstückes, dadurch abgeätzt und in der Salzlösung abtransportiert. Zur Verbesserung kann die Elektrode 25 pulsierend radial oder auch axial bewegt werden, um den Abtransport mittels der Salzlösung oder Säure zu optimieren.

Prinzipiell kann dabei das Werkstück um die Drehachse 2 gedreht werden.

Wenn jedoch wie im dargestellten Fall auf der Kontaktfläche der Elektrode 25 eine Vielzahl von mikroskopisch kleinen Erhebungen 26 vorhanden sind, die entsprechende mikroskopische Kavitäten in der Oberfläche des Werkstückes erzeugen sollen, die später als Ölreservat dienen, muss dann natürlich das Werkstück stillstehend bearbeitet werden.

Ansonsten können solche mikroskopisch feinen Kavitäten - in der Regel nur mit einer Tiefe von wenigen µm - auch durch Laserbeschuss hergestellt werden.

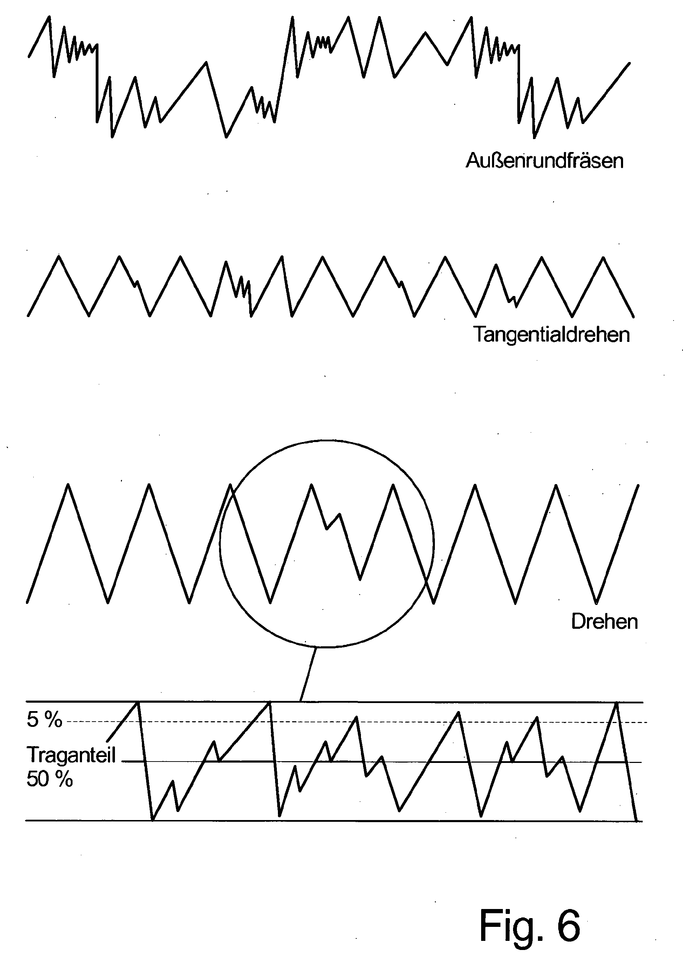

Dabei zeigt Fig. 6 unterschiedliche mikroskopische Oberflächenstrukturen, wie sie durch unterschiedliche spanende Bearbeitungsverfahren mit bestimmter Schneide typisch sind:

Beim Längsdrehen ergibt sich ein typisches, ziemlich regelmäßiges Sägezahnprofil, dessen Rauigkeit Rz im Bereich von 3 - 10 µm liegt.

Die Oberflächenstruktur nach dem Tangentialdrehen führt zu einer unregelmäßigeren Struktur als die Periodizität des Längsdrehens, und mit einem viel geringeren Abstand zwischen Spitzen und Tälern mit einem Rz von ca. 1,5 - 5 µm.

Für das Außenrundfräsen ist es dagegen typisch, dass die Oberflächenstruktur danach Bereiche aufweist, die mikroskopisch gesehen auf unterschiedlich hohem Niveau liegen können, entsprechend dem Einschlag der einzelnen Fräsmesser nacheinander am Werkstück und den dadurch gebildeten, wenn auch sehr feinen, Facetten am Werkstück.

Im unteren Bereich der Fig. 6 ist vergrößert eine mikroskopische Struktur dargestellt, und der angestrebte 50%-ige Traganteil nach Abtragung der mikroskopischen Spitzen, der für Lagerstellen in etwa angestrebt wird.

Dabei wird auch klar, dass mit zunehmendem Abtrag der Spitzen und zunehmendem Traganteil - besonders beim Finishen - die durch das Werkzeug zu bearbeitende Fläche immer größer und dadurch der Abtrag in radialer Richtung immer langsamer wird.

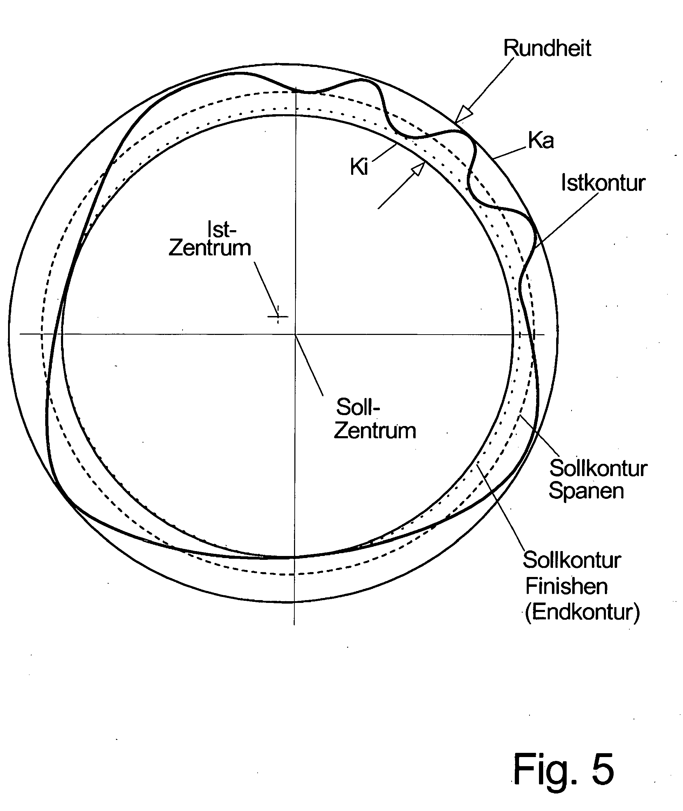

Fig. 5 zeigt - betrachtet in Richtung der Z-Achse - einen Schnitt durch eine Lagerstelle, z. B. einer Kurbelwelle, deren Sollkontur eine exakt runde Kontur ist. In der Praxis ist es jedoch eine - übertrieben dargestellt - unrunde Kontur, zumindest wie sie nach der spanenden Bearbeitung mit bestimmter Schneide durch die Einwirkung bestimmter Störgrößen entsteht.

Dabei wird zum Ermitteln der Rundheit ein innerer Ki und äußerer Hüllkreis Ka an die Istkontur angelegt, und der Abstand dieser beiden Hüllkreise gibt die Rundheit an.

Darüber hinaus kann auch das Istzentrum der entsprechenden Lagerstelle nicht exakt mit dem Sollzentrum übereinstimmen, was insbesondere bei Hublagerzapfen der Fall ist, und die Rundlaufgenauigkeit negativ beeinflusst.

Angegeben ist ferner die Sollkontur nach dem Finishen, also die Endkontur, die dementsprechend radial innerhalb der Sollkontur nach dem Ende des Zerspanens mit bestimmter Schneide liegt.

## Patentansprüche

1. Verfahren zur verwendungsfähigen Fertigbearbeitung von Werkstücken (1') mit rotationssymmetrischen und gegebenenfalls nicht rotationssymmetrischen, zentrisch und gegebenenfalls auch exzentrisch liegenden, Umfangsflächen und angrenzenden Seitenflächen, insbesondere Kurbelwellen (1), wobei
- nach einer spanenden groben Bearbeitung und nachfolgendem eventuellen partiellen Härten die Feinbearbeitung der Umfangsflächen wie folgt abläuft:
- auf den ersten Feinbearbeitungsschritt mit bestimmter Schneide (7,7') erfolgt unmittelbar ein zweiter Feinbearbeitungsschritt mittels Trockenschleifen oder Feintrockenschleifen,
- der erste Feinbearbeitungsschritt sowie der zweite Feinbearbeitungsschritt in der gleichen Maschine und in der gleichen Aufspannung des Werkstückes durchgeführt werden, **dadurch gekennzeichnet, dass**
- nach dem Trockenschleifen ein dritter Feinbearbeitungsschritt mittels Finishen oder elektrochemischem Ätzen (ECM) durchgeführt wird,
- **danach ein Feinabschlussschritt in Form von Einbringen von Kavi**täten im Werkstück mittels ECM durchgeführt wird.

2. Verfahren nach Anspruch 1,
**dadurch gekennzeichnet, dass**
- erster Feinbearbeitungsschritt das Drehfräsen, insbesondere in Form des Außenfräsens oder Orthogonalfräsens, eingesetzt wird, und/oder
- beim ersten Feinbearbeitungsschritt mit bestimmter Schneide vorzugsweise nur bis auf eine Genauigkeit von 25 µm bei der Rundheit und 30 µm beim Durchmesser gearbeitet wird.

3. Verfahren nach einem der vorhergehenden Ansprüche,
**dadurch gekennzeichnet, dass**
- bei einem Feintrockenschleifen unmittelbar nach dem ersten Feinbearbeitungsschritt im ersten Feinbearbeitungsschritt vorzugsweise bei der Rundheit auf 15 µm oder genauer und bei der Durchmessergenauigkeit auf 15 µm oder genauer genau bearbeitet wird und dem Feintrockenschleifen insbesondere kein Bandfinishen nachfolgt.

4. Verfahren nach einem der vorhergehenden Ansprüche,
**Dadurch gekennzeichnet, dass**
eine Bearbeitung mittels ECM und/oder Bandfinishen nur in dem Umfangssegment der Lagerstelle erfolgt, in dem die Hauptbelastung beim Einsatz z.B. in einem Verbrennungsmotor erfolgt.

5. Verfahren nach einem der vorhergehenden Ansprüche,
**dadurch gekennzeichnet, dass**
- der erste Feinbearbeitungsschritt mittels bestimmter Schneide sowie das Finishen in der gleichen Maschine und in der gleichen Aufspannung des Werkstückes, durchgeführt werden, und/oder
- das Trockenschleifen und/oder Feintrockenschleifen und/oder das Drehfräsen mittels Außenfräsen oder Orthogonalfräsen des ersten Feinbearbeitungsschrittes an unterschiedlichen Bearbeitungsstellen des Werkstückes gleichzeitig durchgeführt wird.

6. Verfahren nach einem der vorhergehenden Ansprüche,
**dadurch gekennzeichnet, dass**
- für die Schleifscheibe des Trockenschleifens oder Feintrockenschleifens ein Durchmesser gewählt wird, der mindestens dem Durchmesser des Scheibenfräsers beim Außenfräsen des ersten Feinbearbeitungsschrittes entspricht, maximal jedoch 20% größer ist, und/oder
- die Drehzahl und/oder die Schnittgeschwindigkeit der Schleifscheibe maximal das Dreifache, besser maximal das Doppelte, des Wertes des Scheibenfräsers beträgt und insbesondere für Scheibenfräser und schleifscheibe ein identisch aufgebauter Support verwendet wird.

7. Verfahren nach einem der vorhergehenden Ansprüche,
**dadurch gekennzeichnet, dass**
im ersten Feinbearbeitungsschritt
- die Hauptlager (HL) mittels Singlepointdrehen und
- die Hublager beziehungsweise Pleuellager (PL) mittels Drehfräsen insbesondere in Form des Umfangsfräsens
bearbeitet werden, und
- beim Drehfräsen insbesondere Schnittgeschwindigkeiten von 150 bis 400 m/min benutzt werden und/oder bei der Rundheit auf eine Genauigkeit von 10 µm oder genauer und beim Durchmesser auf eine Genauigkeit von 10 µm oder genauer bearbeitet wird, wenn ein Finishen oder ECM folgt,
- beim Singlepointdrehen insbesondere Schnittgeschwindigkeiten von 250 bis 400 m/min benutzt werden und/oder bei der Rundheit bis auf eine Genauigkeit von maximal 10 µm und beim Durchmesser bis auf eine Genauigkeit von maximal 10 µm bearbeitet wird.

8. Verfahren nach einem der vorhergehenden Ansprüche,
**dadurch gekennzeichnet, dass**
- falls der zweite Feinbearbeitungsschritt das elektrochemische Ätzen (ECM) war, die Elektrode in definierter Verteilung Erhebungen auf ihrer Wirkfläche mit einer Höhe von maximal 10 µm, besser maximal 6 µm, noch besser maximal 2 um, aufweist zum Einbringen von Kavitäten in der Werkstückoberfläche, und/oder
- im Fall eines mehrstufigen Finishens ein Laserbeschluss nach der letzten Stufe des Finishens erfolgt.

9. Verfahren nach einem der vorhergehenden Ansprüche,
**dadurch gekennzeichnet, dass**
- beim Orthogonalfräsen ein Fräser mit 1 bis 10 Schneiden, insbesondere mit 4 bis 6 Schneiden, die vorzugsweise ungleichmäßig über den Umfang verteilt sind, verwendet wird, und/oder
- beim Fräsen Werkzeuge mit Schneiden verwendet werden, die mittels z.B. Keilsystemen eine Feinausrichtung von 5 µm oder genauer gegenüber dem Werkzeuggrundkörper erlauben.

10. Verfahren nach einem der vorhergehenden Ansprüche,
**dadurch gekennzeichnet, dass**
- beim Orthogonalfräsen der im Eingriff befindliche Fräser in Y-Richtung um mindestens 20%, besser mindestens 50%, insbesondere aber maximal 60% seines Durchmessers verfahren wird, und in dieser Zeit das Werkstück mindestens 5, besser mindestens 10, besser mindestens 20 Umdrehungen vollzieht, und/oder
- beim Orthogonalfräsen die Drehzahl des Orthogonalfräsers mindestens das 80-fache, besser mindestens das 100-fache, besser mindestens das 130-fache der Drehzahl des Werkstückes beträgt.

11. Verfahren nach einem der vorhergehenden Ansprüche,
**dadurch gekennzeichnet, dass**
- beim elektrochemischen Ätzen (ECM) eine Materialabnahme von maximal 30 µm, besser nur 20 µm, besser nur 10 µm, aber insbesondere mindestens 5 µm erfolgt.

12. Verfahren nach einem der vorhergehenden Ansprüche,
**dadurch gekennzeichnet, dass**
im ersten Feinbearbeitungsschritt Hublager und Pleuellager in der gleichen Aufspannung bearbeitet werden und insbesondere in der gleichen Aufspannung wie die vorangehende Grobbearbeitung, und dabei insbesondere die Kurbelwelle an Flansch und Zapfen mittels Spannfuttern gehalten wird.

13. Verfahren nach einem der vorhergehenden Ansprüche,
**dadurch gekennzeichnet, dass**
im zweiten Feinbearbeitungsschritt die Kurbelwelle jeweils mittels insbesondere einer Lünette an einem bereits im ersten Schritt fein bearbeiteten, insbesondere unmittelbar neben dem zu bearbeitenden Lager liegenden, Hauptlager abgestützt wird, und insbesondere in einem letzten Feinbearbeitungsschritt die dabei sich auf den bearbeiteten Lagern ergebenden Lünettenabdrücke beseitigt werden, wobei die Abstützung immer auf der Seite der Fortschrittsrichtung bei diesem letzten Schritt liegt.

14. Verfahren nach einem der vorhergehenden Ansprüche,
**dadurch gekennzeichnet, dass**
im ersten Feinbearbeitungsschritt außer den Mittel- und Hublagern auch Flansch und Zapfen bearbeitet werden, während die Kurbelwelle an dem zur Bearbeitungsstelle benachbarten Ende insbesondere mittels einer Zentrierspitze bei dem gegenüber zurückgezogenen Spannbacken und auf der anderen Seite in einem Backenfutter gehalten wird.

15. Drehmaschine zur verwendungsfähigen Fertigbearbeitung von Werkstücken mit rotationssymmetrischen, und ggf. nicht rotationssymmetrischen, zentrisch und ggf. auch exzentrisch liegenden, Umfangsflächen und angrenzenden seitenflächen, insbesondere Kurbelwellen, mit
- einem Maschinenbett (11),
- einem Spindelstock (12), insbesondere mit Spannfutter (13),
- einem Gegenspindelstock (14) mit Spannfutter (13),
- einer gesteuerten C-Achse,
- mindestens einer Lünette,
- einer Fräseinheit mit einem Scheibenfräser oder mit einem Orthogonalfräser, wobei der Orthogonalfräser zusätzlich zur X-Achse eine Y-Achse aufweist,
- einer Schleifeinheit,
**dadurch gekennzeichnet, dass**
- eine Finisheinheit mit einem Finishformteil (20), welches eine Kavität entsprechend der konvexen Umfangsfläche des Werkstückes, an die es angelegt werden soll, aufweist sowie ein Finish-Band (21), welches über die Kontaktfläche des Finishformteiles (20) geführt ist und mit seinen Enden auf je einer Vorratsrolle aufgewickelt ist.

16. Drehmaschine nach Anspruch 15,
**dadurch gekennzeichnet, dass**
- die Drehmaschine eine Lasereinheit zum Beschießen der Umfangsflächen des Werkstückes aufweist, und/oder
- eine aktivierbare und deaktivierbare Messeinheit (22).

17. Drehmaschine nach Anspruch 15 oder 16,
**dadurch gekennzeichnet, dass**
- die Schneiden des Fräsers aus Feinstkornhartmetall mit einer Körnung von 0,2 µm bis 0,5 µm bestehen.

## Claims

1. A method for finishing work pieces ready to use, the work pieces including rotation symmetrical or non-rotation symmetrical, centric or eccentrical circumferential surfaces and adjacent side surfaces, wherein the work pieces are in particular crank shafts (1'), wherein
- directly after chipping coarse machining and subsequent optional partial hardening, the circumferential surfaces are fine machined as follows:
- after a first fine machining step with a defined edge (7, 7') a second fine machining step through dry grinding or fine dry grinding is performed,
- the first fine machining step and the second fine machining step are performed in the same machine and in the same clamping of the work piece
**characterized in that** the
- a third fine machining step is performed after the dry grinding through finishing or electro chemical etching (ECM),
- thereafter a fine completion step is performed by introducing cavities into the work piece through (ECM).

2. The method according to claim 1,
**characterized in that**
turn milling, in particular external milling or orthogonal milling is used as a first fine machining step, and/or
- the first fine machining step with the defined edge is advantageously only performed to a precision of 25 µm with respect to circularity and 30 µm with respect to diameter.

3. The method according to one of the preceding claims,
**characterized in that**
- fine dry grinding directly after the first fine machining step is performed in the first fine machining step advantageously with a precision of 15 µm or better with respect to circularity and 15 µm or better with respect to diameter and in particular no band finishing is performed after the fine dry grinding.

4. The method according to one of the preceding claims,
**characterized in that**
processing by ECM and/or band finishing is only performed in a circumferential segment of the bearing in which circumferential segment a main load is applied for example when used in an internal combustion engine.

5. The method according to one of the claims,
**characterized in that**
- the first fine machining step is performed with a defined edge and the finishing is performed in the same machine and in the same clamping of the work piece and/or
- the dry grinding and/or the fine dry grinding and/or the turn milling is performed by external milling or orthogonal milling of the first fine machining step at different processing locations of the work piece simultaneously.

6. The method according to one of the preceding claims,
**characterized in that**
- a diameter is selected for a grinding disc of the dry grinding or the fine dry grinding wherein the diameter of the grinding disc corresponds at least to a diameter of a disc cutter during external milling of the first fine machining step or the grinding disc is 20% greater at the most, and/or
- a speed and/or a cutting speed of the grinding disc is three times at the most, better two times at the most of a speed and/or cutting speed of the disc cutter, and in particular an identically configured support is used for the disc cutter and for the grinding disc.

7. The method according to one of the preceding claims,
**characterized in that** the first fine machining step includes:
- machining the main bearings (HL) by single point turning; and
- machining the crank pin bearings or piston rod bearings (PL) by turn milling, in particular by circumferential milling; and
- the turn milling uses in particular cutting speeds of 150 - 450 m/min and/or a precision of 10 µm or better is achieved with respect to circularity and a precision of 10 µm or better is achieved with respect to diameter when finishing or (ECM) is performed thereafter,
- single point turning, uses in particular cutting speeds of 250 to 400 m/min and/or a precision of 10 µm at the most is achieved with respect to circularity and a precision of 10 µm at the most is achieved with respect to diameter.

8. The method according to one of the preceding claims,
**characterized in that**
- in case the second fine machining step is the electro chemical etching (ECM) the electrode includes protrusions in a defined distribution on its operating surface wherein the protrusions have a height of 10 µm at the most, better 6 µm at the most, even better 2 µm at the most for introducing cavities in the work piece surface and/or
- in case multi step finishing is performed laser impinging is performed after the last finishing step.

9. The method according to one of the preceding claims,
**characterized in that**
- a cutter with one to 10 cutting edges, in particular 4 - 6 cutting edges is used for orthogonal milling, wherein the cutting edges are advantageously unevenly distributed over a circumference of the cutter and/or
- cutting tools with cutting edges are used for the milling wherein the cutting edges facilitate a fine adjustment of 5 µm or less relative to a base element of the tool using for example wedge systems.

10. The method to one of the preceding claims,
**characterized in that**
- during orthogonal milling an engaging cutter is moved in a Y-direction by at least 20%, better at least 50%, in particular however at the most by 60% of its diameter and the work piece performs at least 5 revolutions during this time period, better at least 10 revolutions, even better 20 revolutions and/or
- during the orthogonal milling a speed of an orthogonal cutter is at least 80 times, better at least 100 times, even better at least 130 times a speed of the work piece.

11. The method according to one of the preceding claims,
**characterized in that**
- electro chemical etching (ECM) performs a material removal of 30 µm at the most, better only 20 µm, even better only 10 µm, but in particular at least 5 µm.

12. The method according to one of the preceding claims,
**characterized in that**
- in a first fine machining step the crank pin bearing and the connecting rod bearing are machined in an identical clamping setup, and in particular in the same clamping setup as the preceding coarse machining, and thus in particular the crank shaft is supported at its flange and at its crank pins by jaw chucks.

13. The method according to one of the preceding claims,
**characterized in that**
in a second fine machining step the crank shaft is respectively supported at a main bearing, in particular by a back rest, wherein the main bearing has already been fine machined in the first step and is in particular arranged directly adjacent to the bearing to be machined, and in particular in a last fine machining step the back rest impressions are removed that are present on machined bearings, wherein a support is always provided on a side of a feed direction in this last step.

14. The method according to one of the preceding claims,
**characterized in that**
the first fine machining step also processes the flange and the pinion in addition to the main bearings and the crank pin bearings, wherein the crank shaft is in particular supported by a centering tip and an end that is adjacent to the machining location with pulled back clamping jaws and on the other side in a jaw chuck.

15. A turning machine for finishing work pieces ready to use wherein the work pieces have rotation symmetrical and optionally non-rotation symmetrical, centric and optionally non-centric circumferential surfaces and adjacent side surfaces, in particular crank shafts, the turning machine comprising:
- a machine bed (11),
- a spindle stock (12), in particular with a jaw chuck (13)
- an opposite spindle stock (14) with a jaw chuck (13),
- a controlled C-axis,
- at least one back rest,
- a milling unit with a disc cutter or with an orthogonal cutter, wherein the orthogonal cutter includes a Y-axis in addition to the X-axis,
- a grinding unit,
**characterized in that**
- a finishing unit with a finishing form element (20) which includes a cavity according to a convex circumferential surface of the work piece to which it shall be applied and with a finishing band (21) which is run over a contact surface of the finishing form element (20) and which is wound with its ends onto the a respective storage drum.

16. The turning machine according to claim 15,
**characterized in that**
- the turning machine has a laser unit for impinging circumferential surfaces of the work piece and/or
- an activatable and deactivatable measuring unit (22).

17. The turning machine according to claim 15 or 16,
**characterized in that**
- the cutting edges of the cutter are made from finest grit hard metal with a grit of 0.2 µm to 0.5 µm.

## Revendications

1. Procédé d'usinage de finition, apte à l'utilisation, de pièces avec des surfaces périphériques, symétriques en rotation et, le cas échéant, non symétriques en rotation, centrées et, le cas échéant, également excentrées et des surfaces latérales adjacentes, en particulier de vilebrequins (1), procédé dans lequel,
- après un usinage grossier par enlèvement de copeaux, suivi éventuellement d'une trempe, l'usinage fin des surfaces périphériques a lieu comme suit :
- la première étape d'usinage fin avec un taillant déterminé (7, 7') est immédiatement suivie par une seconde étape d'usinage fin par rectification à sec ou rectification fine à sec,
- la première étape d'usinage fin, ainsi que la seconde étape d'usinage fin sont exécutées sur la même machine et avec le même système de serrage de la pièce,
**caractérisé en ce que**
- après la rectification à sec, une troisième étape d'usinage fin est exécutée au moyen d'opérations de finition ou de gravure électrochimique (ECM),
- ensuite, une dernière étape finale de finition est exécutée en pourvoyant la pièce de cavités au moyen d'un usinage électrochimique ECM.

2. Procédé suivant la revendication 1,
**caractérisé en ce que**
- lors de la première étape d'usinage fin, le tournage-fraisage est utilisé, notamment sous la forme d'un fraisage de profil ou d'un fraisage orthogonal, et/ou
- lors de l'étape d'usinage fin avec un taillant déterminé, les opérations d'usinage sont exécutées, de préférence avec une précision jusqu'à 25µm seulement pour la rotondité et jusqu'à 30µm seulement pour le diamètre.

3. Procédé suivant une des revendications précédentes,
**caractérisé en ce que**
- dans le cas, où une rectification fine à sec doit suivre immédiatement la première étape d'usinage fin, les opérations d'usinage de celle-ci sont exécutées, de préférence avec une précision jusqu'à 15µm ou plus grande pour la rotondité et jusqu'à 15 µm ou plus grande pour le diamètre et **en ce que** la rectification fine à sec n'est pas suivie d'une finition à la bande.

4. Procédé suivant une des revendications précédentes,
**caractérisé en ce que**
un usinage électrochimique ECM et/ou une finition à la bande sont effectués seulement sur le segment périphérique du point d'appui, auquel la charge principale est appliquée en utilisation, par exemple dans un moteur à combustion.

5. Procédé suivant une des revendications précédentes,
**caractérisé en ce que**
- la première étape d'usinage fin au moyen d'un taillant déterminé, ainsi que la finition sont exécutés sur la même machine et avec le même système de serrage de la pièce à usiner, et/ou
- les opérations de rectification à sec et/ou de rectification fine à sec et/ou de tournage-fraisage au moyen d'un fraisage de profil ou d'un fraisage orthogonal de la première étape d'usinage fin sont exécutés simultanément à différents points à usiner de la pièce.

6. Procédé suivant une des revendications précédentes,
**caractérisé en ce que**
- pour la rectification à sec ou de la rectification fine à sec, un diamètre de meule est choisi, qui est au moins égal, mais supérieur au maximum de 20% au diamètre de la fraise-disque utilisé pour les des opérations de fraisage de profil de la première étape d'usinage fin, et/ou
- le nombre de tours et/ou la vitesse de coupe de la meule s'élèvent au maximum au triple, mieux au maximum au double de la valeur de la fraise-disque et **en ce que**, notamment pour la fraise-disque et la meule, un support de conception identique est utilisé.

7. Procédé suivant une quelconque des revendications précédentes, **caractérisé en ce que**
lors d'une première étape d'usinage fin, sont usinés
- les coussinets principaux (HL) par tournage singlepoint et
- les coussinets de levage, c'est-à-dire les coussinets de bielle (PL) par tournage-fraisage, en particulier par fraisage tangentiel, et
**en ce que**
- pour le tournage-fraisage sont utilisées, en particulier des vitesses de coupe de 150 à 400 m/min et/ou l'opération de tournage-fraisage est effectuée avec une précision jusqu'à 10 µm ou plus grande pour la rotondité et jusqu'à 10µm ou plus grande pour le diamètre, dans le cas, où les opérations de tournage-fraisage sont suivies d'une finition ou d'un usinage électrochimique ECM.
- pour le tournage singlepoint sont utilisées, en particulier des vitesses de coupe de 250 à 400 m/min et/ou les opérations de tournage singlepoint sont effectuées avec une précision jusqu'à 10 µm au maximum pour la rotondité et jusqu'à 10µm au maximum pour le diamètre.

8. Procédé suivant une des revendications précédentes,
**caractérisé en ce que**
- dans le cas, où l'usinage électrochimique (ECM) a été la seconde étape d'usinage fin, l'électrode présente sur sa surface active des aspérités d'une hauteur maximale de 10µm, mieux de 6µm et encore mieux de 2µm selon une répartition définie, afin de pourvoir de cavités la surface de la pièce, et/ou
- dans le cas d'une finition à plusieurs étages, un bombardement laser a lieu après le dernier étage de la finition.

9. Procédé suivant une quelconque des revendications précédentes,
**caractérisé en ce que**
- pour le fraisage orthogonal est utilisée une fraise avec 1 à 10 taillants, en particulier avec 4 à 6 taillants répartis, de préférence de façon irrégulière, sur la périphérie et/ou
- pour le fraisage sont utilisés des outils avec des taillants permettant, par exemple au moyen de systèmes à clavettes, une orientation fine avec une précision de 5µm ou plus grande par rapport au corps de base de l'outil.

10. Procédé suivant une des revendications précédentes,
**caractérisé en ce que**
- pour le fraisage orthogonal, la fraise insérée est déplacée dans la direction Y d'au moins 20%, mieux d'au moins 50%, mais, en particulier de 60% au maximum de son diamètre et **en ce que** pendant ce temps, la pièce exécute au moins 5, mieux au moins 10, encore mieux au moins 20 rotations, et/ou
- pour le fraisage orthogonal, le nombre de tours de la fraise orthogonale s'élève à 80 fois, mieux à au moins 100 fois, encore mieux à au moins 130 fois le nombre de tours de la pièce.

11. Procédé suivant une quelconque des revendications précédentes,
**caractérisé en ce que**
- pour l'usinage électrochimique (ECM), un enlèvement de matière de 30µm au maximum, mieux de 20µm seulement, encore mieux de 10µm seulement, mais en particulier d'au moins 5µm est pratiqué.

12. Procédé suivant une quelconque des revendications précédentes,
**caractérisé en ce que**
lors de la première étape d'usinage fin, les coussinets de levage et de bielle sont usinés dans le même système de serrage et, notamment dans le même système de serrage que pour l'usinage grossier précédent, et **en ce que** pendant ces opérations d'usinage, notamment le vilebrequin est tenu au moyen de mandrins au niveau de la bride et des manetons.

13. Procédé suivant une quelconque des revendications précédentes
**caractérisé en ce que**
lors de la seconde étape d'usinage fin, le vilebrequin est appuyé, en particulier au moyen d'une lunette, sur un coussinet principal ayant déjà été usiné fin lors de la première étape et positionné, notamment à proximité immédiate du coussinet à usiner, et **en ce que** les empreintes de lunette laissées sur les coussinets usinés sont enlevées au cours d'une dernière étape d'usinage fin, l'appui étant, au cours de cette dernière étape, toujours situé sur le côté de la direction d'avancement.

14. Procédé suivant une des revendications précédentes,
**caractérisé en ce que**
lors de la première étape d'usinage fin sont également usinés, hormis les coussinets central et de levage, la bride et les manetons, pendant que le vilebrequin est tenu à son extrémité avoisinant le point d'usinage, en particulier au moyen d'une pointe de centrage au niveau de la mâchoire de serrage rétractée à l'opposé, et, de l'autre côté, dans un mandrin à mâchoires.

15. Tour destiné à l'usinage de finition, apte à l'utilisation, de pièces avec des surfaces périphériques, symétriques en rotation et, le cas échéant, non symétriques en rotation, centrées et, le cas échéant, également excentrées et des surfaces latérales adjacentes, en particulier de vilebrequins, comportant
- un banc de machine (11),
- une poupée (12), notamment avec un mandrin de serrage (13),
- une contre-poupée (14) avec un mandrin de serrage (13),
- un axe C commandé,
- au moins une lunette,
- une unité de fraisage avec une fraise-disque ou avec une fraise orthogonale, la fraise orthogonale présentant en plus de l'axe X, un axe Y,
- une unité de rectification,
**caractérisé en ce que**
- une unité de finition avec une pièce de finition moulée (20), qui présente une cavité correspondant à la surface périphérique convexe de la pièce, contre laquelle elle doit être placée, ainsi qu'une bande de finition (21), qui est guidée sur la surface de contact de la pièce de finition moulée (20) et enroulée par ses extrémités respectivement autour d'une bobine d'alimentation.

16. Tour suivant la revendication 15,
**caractérisé en ce que**
- le tour présente une unité laser destiné au bombardement des surfaces périphériques de la pièce et/ou
- une unité de mesure (22) pouvant être activée et désactivée.

17. Tour suivant la revendication 15 ou 16,
**caractérisé en ce que**
- les taillants de la fraise sont en métal dur à grain très fin avec une taille de grain de 0,2µm à 0,5µm.
